# EUROPEAN PATENT SPECIFICATION

(11) **EP 2 073 999 B1**
(45) Date of publication and mention of the grant of the patent: **24.02.2016**
(21) Application number: 07842835.6
(22) Date of filing: 20.09.2007
(51) Int. Cl.: B60R 21/26

(54) **METHOD FOR MAKING A FILTER AND FILTER**
VERFAHREN ZUR FILTERHERSTELLUNG UND FILTER
PROCÉDÉS DE FABRICATION DE FILTRES ET FILTRES

(30) Priority: 21.09.2006 US 846381 P; 14.10.2006 US 851719 P
(43) Date of publication of application: 01.07.2009
(60) Divisional application: 12150508.5
(73) Proprietor: ACS Industries, Inc., Woonsocket, RI 02895 (US)
(72) Inventor: GREENWOOD, George, Woonsocket, RI 02895 (US)
(74) Representative: Oldroyd, Richard Duncan
(86) International application number: PCT/US2007/078971
(87) International publication number: WO 2008/036788

(56) References cited:
- EP-A2- 0 800 964
- US-A- 2 271 187
- US-A- 2 830 359
- US-A- 4 414 902
- US-A- 4 486 927
- US-B2- 6 846 013

## Description

### Background of the invention

This invention relates to a filter made from an expanded metal sheet having a variable opening pitch so that the openings are less likely to align, and methods for making such filters.

Expanded metal sheets have found a variety of uses, from mats used for fighting fires to filters for automobile airbag inflators. An expanded metal sheet can be made by taking a sheet of metal, puncturing the sheet to produce a multiplicity of slits, and pulling the sheet perpendicular to the direction of the slit to elongate the slit and provide an opening in the sheet. Expanded metal sheets can also be made by welding adjacent rods at regular points and pulling perpendicular to the rods. Another method for making an expanded metal sheet is by piercing and cold forming openings (often called "diamonds" because of their final shape; they are separated from each other by "strands"): a metal sheet is advanced beyond the face of a flat bottom die, a top serrated cutting die descends to form an entire row of slits and simultaneously cold forms an entire row of half diamonds; the top die ascends and is indexed one half diamond left (or right); the die then descends slitting and cold forming another full row of half diamonds, so that a full row of full diamonds is completed in two strokes. The final length of sheet, with the accompanying holes, is longer than the original and so it is expanded, as well as the openings formed being expanded.

Thus, expanded metal sheets are typically made by using a row of teeth or bits in a punch to produce perforations in the sheet. The side of the sheet facing the punch will have an indentation around the perforation, and the reverse side of the sheet will have a corresponding raised portion, a burr, around the perforation. The regularity of the perforations allows nesting of the perforations when the sheet is stacked, curled, rolled or otherwise placed in overlying relation, and the presence of burrs can lock the structure in a nested configuration. The burr accompanying each perforation also creates an area of increased friction so that the expanded metal sheet does not slide easily, and especially not when in contact with itself when curled or a similar sheet.

### Summary of the Invention

The invention relates to a method for making a filter from a variable opening pitch expanded metal sheet according to claim 1, and also to a filter comprising a variable opening pitch expanded metal sheet according to claim 10.

The variable opening pitch expanded metal sheet has different spacings between adjacent rows of openings, and can be made by varying the rate at which the sheet is fed through the equipment, the rate of punching, the amount of stretching, and/or the amount by which the sheet is optionally flattened. The expanded metal sheet is useful in making filters for automobile airbag inflators.

In one aspect, the expanded metal sheet has a row of perforations indexed perpendicularly with respect to the length of the sheet and with respect to at least one other row of perforations.

In another aspect, the expanded metal sheet has been flattened to eliminate protrusions (and depressions) caused by the perforation process and produce a sheet having smoother sides.

In yet another embodiment the method provides sheeting having variably spaced perforations by indexing the punching tool perpendicularly to the (longitudinal) direction of travel of the sheet.

In one embodiment, the expanded metal sheet has a multiplicity of rows of openings wherein the spacing between adjacent rows is not constant. The sheet is preferably flattened.

This invention also provides an automobile airbag inflator filter comprising a flattened expanded metal sheet having a multiplicity of rows of openings, the sheet rolled into a cylinder, and secured with a weld, the spacing between adjacent rows of openings varying between different adjacent rows.

Nesting in a metal filter is reduced by using a variable opening pitch expanded metal sheet having different spacings between adjacent rows of openings. Such a filter is made by varying the rate at which the sheet is fed through the equipment, the rate of punching, the amount of stretching, and/or the amount by which the sheet is optionally flattened. The expanded metal sheet is useful in making filters for automobile airbag inflators. Nesting can also be reduced by transversely indexing the punch, using different punch sizes on multiple punches, or combinations of these techniques. The filter can be wire wrapped to enhance its strength.

### Brief Description of the Drawings

Fig. 1 is a schematic depiction of an embodiment of making an expanded metal sheet and a filter from the sheet.
Fig. 2 is an end view of a filter.
Fig. 3A is a sheet having openings on one portion and lacking openings on another, and Figs. 3B and 3C are tubes formed by rolling the sheet in Fig. 3A.
Fig. 4A is a rolled up expanded metal sheet having two bands of perforations, and Fig. 4B is the article in Fig. 4A with wound wire.

### Detailed Description of Specific Embodiments

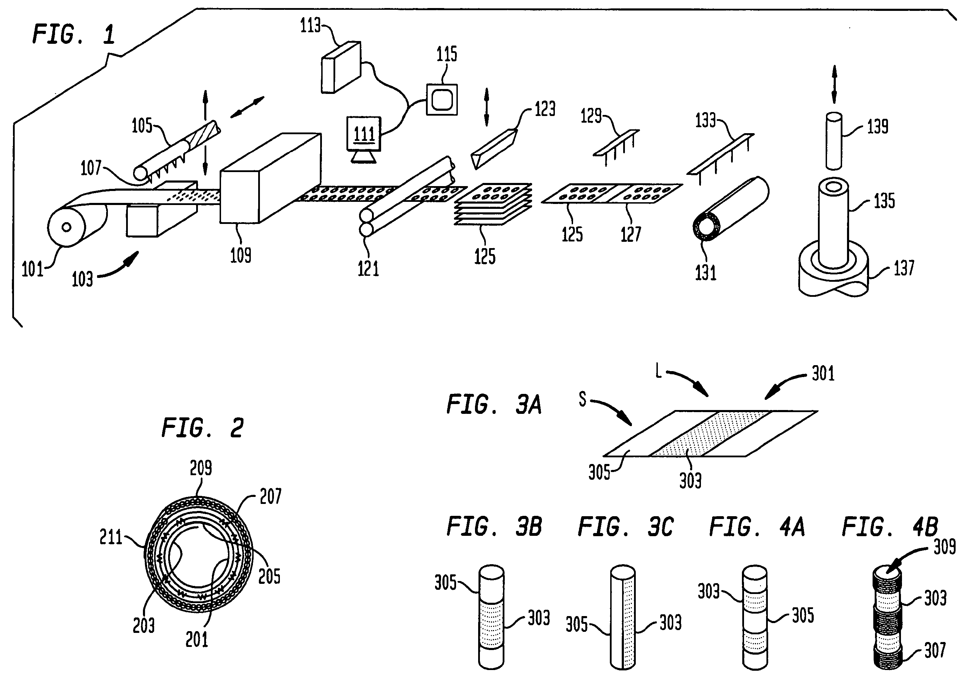

With reference to Fig. 1, the manufacture of an expanded metal sheet used in this invention starts with a roll of metal strip or sheet 101 (typically about nine inches wide for making airbag inflator filters, although any width can be used depending on the equipment). For filters for airbag inflators, stainless steel, such as SS304, 309, or 310 is preferred. Depending on the environment in which the expanded metal is used, other metal compositions available in a sheet form can be used.

The sheet is fed first to a press 103 in which a punch 105 having a number of teeth or bits 107 is moved into the sheet so that the teeth perforate the sheet and then the punch is removed, just as in a stamping operation. The geometry of the bits, which are preferably identical to each other, is preferably such that a slit is formed in the sheet. Depending on the geometry of the bit, the depth of penetration of the bit will determine the length of the slit formed; the deeper the penetration, the longer the slit, and thus the more open the final structure can be after stretching. For airbag inflator filters, the opening is made to a size based on the airbag manufacturer's specifications for the open area of the sheet, the porosity of the sheet, or other parameter(s) required for the filter.

The sheet is advanced preferably by a servo motor (not shown) or other mechanism whereby the longitudinal advance of the sheet can be precisely controlled. The advance of the sheet is preferably in discrete steps so that the sheet is stationary when punched. Although not preferred, a roller with teeth can be used in a continuously moved sheet.

The perforated sheet produced in the press is then fed to a stretcher **109** in which differential rollers stretch the perforated sheet in the axial direction (that is, along the direction of travel) so that the slits are opened into diamond-shaped holes. (Of course, an hexagonal bit can be used to make hexagonal openings, or other bit geometries, can be used, but slits formed into diamonds is the most common shape.) A video control system including a camera **111**, connected with a computer controller **113** running software, and an optional monitor **115**, examines the holes or open area, and can learn (after parameters are input to the controller) whether the perforations are within specification. Although not shown, the camera preferably is movably mounted on a track and is made to traverse the sheet as the sheet is advanced. The camera preferably captures an entire row (transversely to the direction of travel) and more preferably a few adjacent rows within its field of view. The software checks the opening sizes and/or shapes (geometry) to determine whether the individual openings, or open area (actual or estimated or calculated), are within specification. A second camera can be placed between the punch and the stretcher with similar hardware and software to determine whether the initial punching is within specification. The calculation for determining whether the product is within spec is typically based on the light transmitted through the openings made by the punch. (Suitable software is commercially available from Media Cybernetics, Inc., Silver Spring. MD, under the IMAGE PRO brand.)

While shown with a single punch, multiple punches can be used to provide different perforation spacings, geometries, and/or depths. Two punches, for example, can be cycled in any desired order any number of strokes or cycles (such as the first punch alternating with the second, or punching twice as often, or half as often, or alternating by twos, and so on). Preferably, at least one press is indexed transversely back and forth so that adjacent rows made by that press are offset from each other. (As used herein, a "row" of perforations is preferably transverse to the length of the sheet, although it is possible to have the press angled with regard to the longitudinal direction of the sheet.)

The video control system performs an optical inspection of the expanded metal sheet product and determines whether the product is within specification. To alter the process to get on, return to, or change the specification, the advance of the sheet is altered by adjusting the servo motor (via the computer controller) to change the longitudinal spacing of the perforations. Alternatively, the stretcher is adjusted to increase or decrease the amount the perforated sheet is stretched. Both can be adjusted to further avoid nesting of adjacent layers and/or alignment of radially adjacent openings when the sheet is curled.

The preferred method of providing a variable pitch is to gradually change the advancement of the sheet. For example, the spacing between rows can be gradually increased and then returned to the original value (e.g., with a 12.7 mm (500 mil) initial spacing, increasing by 0.0254 mm (1 mil) up to 0.381 mm (15 mils) and then back to the initial spacing, like a saw tooth waveform; or the change can be sinusoidal or like a triangular waveform; or irregular). By having a variable pitch, the possibility of nesting can be greatly decreased.

The expanded metal sheet can be flattened by one or a pair 121 of rollers. The sheet need not be compressed to any significant degree, and preferably is not compressed, to the extent that flattening would then tend to close up the openings. The video control system camera (or a second or third camera) can be located after the flattening step, in which case it should be appreciated that adjusting the degree of flattening, and the resulting closing of the openings, is an additional parameter that can be adjusted to achieve the desired open area. Flattening the burrs accomplishes two objectives. The burrs present areas of high frictional contact; the flattened expanded metal sheet can slide more easily against itself if rolled or curled. The increased surface area resulting from flattening allows for increased welding currents and a higher weld strength due to the increased area of contact.

In the manufacture of a filter for automotive airbag inflators, one filter geometry is a cylinder having porous walls. To make such a device, and continuing with Fig. 1, the flattened expanded metal sheet is cut **123** into individual pieces **125** that can be placed overlapping another (flattened) expanded metal sheet **127**, possibly having a different open area, and attached to each other via a welder **129** (preferably by electric welding). The joined composite sheet is then rolled into a cylinder **131** and the edge of the mesh secured to the cylinder by a welder **133**. To produce the proper ID and OD (inner and outer diameters), the welded mesh cylinder **135** is placed into a female mold **137** optionally having a movable inner wall, and a mandrel **139** optionally expandable is inserted into the central bore of the cylinder. The desired ID and OD of the final filter is achieved by the combination of the mandrel, optionally expanding, and the mold, optionally contracting, to cold form the cylinder into the desired radial geometry and dimensions.

In the manufacture of these filters, formed from multiple wrappings of the flattened expanded metal sheet, no nesting of the perforations was observed. Reduced nesting and the elimination of burrs allows for more filter layers in a given radial distance. Accordingly, if the design requires a specified OD, a larger ID can be provided; and likewise a specified ID will result in a smaller OD and thus a smaller device in total. Nesting is also deleterious because the shift in alignment of the sheet due to nesting of radially adjacent openings may not render the filter end (cylinder top and/or bottom) dimensions out of spec, while nevertheless providing a open channel between adjacent filter layers. Even if openings in adjacent layers are almost aligned, the absence of burrs eliminates the tendency for the openings to align (the burr of one opening settling into the adjacent opening) and thus decrease the filtering capacity.

The weld strength of the flattened sheet is twice that achieved when the sheet was not flattened. Spot welding is typically automated through a machine in which the welding current is operator-adjusted. Setting a fixed current leads to inconsistent welds when a non-flattened expanded metal sheet is welded because the burr areas are not uniform and surface area of contact through which the weld current flows varies for each weld. When the expanded metal sheet is flattened, there is a larger surface area, and so a larger welding current can be used. It was found that doubling the welding current for welding a flattened expanded metal sheet resulted in a weld strength more than double the weld strength of a sheet with burrs, as well as a more consistent weld strength.

The filter described above is made from two expanded metal sheets rolled into a cylinder. During the rolling, one or more intermediate layers can be added so that the filter has multiple repeating layers, or different intermediate layers each at a different radial distance. For example, Fig. 2 depicts the end (or cross-section) of a rolled cylindrical filter wherein a first flattened expanded metal sheet **201** is joined to a second flattened expanded metal sheet **203** by a weld **205** and rolling is started from the first sheet. At a predetermined position or amount of rolling, a fabric **207** is inserted between the layers, and at a position radially outward from the predetermined position a metal screen **209** is inserted between the layers of metal sheet. The outermost layer of the metal sheet is attached to itself by a weld **211**. The filter thus formed has multiple filtering layers of different materials.

Fig. 3A depicts an expanded metal sheet **301** having a portion **303** that has been perforated and expanded, and disposed between areas **305** that have not been perforated. When punching is resumed after a solid (unperforated) area it preferably begins gradually, with the first few punches preferably not perforating the sheet to avoid the tendency of the punch to cut the sheet in two when a solid area is present downstream of the area to be perforated. The sheet has long edges **L** formed by the original sheet, and short edges **S** where it has been cut as a portion from a larger sheet (such as shown in Fig. 1). Some airbag designs require the flow of the expanded gas (whether by explosion or a compressed gas, or combination thereof) to be directed in a particular direction. For example, a curtain-type airbag may require gas to be directed along a linear extent. Alternatively, the area in which the airbag assembly is installed may have only a portion available for fluid communication with the airbag. The sheet in Fig. 3A can be rolled up, using as its axis a line connecting the short sides. In this case, the long sides will be overlapped and welded to create a filter having the geometry shown in Fig. 3B, where the ends of the filter are unperforated and only the central section is perforated. Alternatively, the sheet can be rolled using as the axis a line connecting the long sides, which results in the geometry shown in Fig. 3C. Although sheet **301** is shown as having a single perforated section, multiple perforated sections, separated by unperforated sections, can be made (by not punching over those areas) to create a filter as shown in Fig. 3B but having two perforated bands separated by an unperforated area, as shown in Fig. 4A, as opposed to the single perforated band shown. It is apparent in view of the foregoing examples that various portions can be perforated or left unperforated, and the sheet cut and rolled to provide a tubular filter having perforations only at predetermined areas to direct the gas flow as desired.

The pattern of openings is determined by the arrangement of bits on the punch and the punch rate as a function of the linear travel of the sheet. Avoiding nesting can be accomplished by various modifications of this basic design. As noted above, multiple punches having different arrangements of bits (for example, laterally offset from the other punch(es)). The rate of punching can be altered to provide an increasing distance between adjacent openings (the pitch), and then cycled back, as noted above. For instance, the travel of the sheet can be adjusted so that the pitch increases from the previously punched row by 0.254 mm (one mil) until the separation is 0.381 mm (15 mils), and then the process is reversed (decreasing each by one mil) or started from the beginning again. Given the specifications for a particular filter, the pitch can be varied as a function of the circumference defined by a given portion of the sheet in the rolled up filter, so that radially adjacent openings do not nest. Yet another method for preventing nesting is by indexing one or more punches transversely so that each row is offset laterally from the previous row. As with the other methods, the punch can be indexed back and forth by a fixed amount, or by a predetermined amount one way until a desired offset is achieved, and then back. For example, using the center-to-center distance (for the openings) in a given row, the next row can be indexed transversely 30% on the next punch, an additional 30% on the following punch, and so on, for a predetermined number of times, and then indexed back to the original position. Knowing the position of any portion of the sheet in the filter, as based on the filter specification, allows a straightforward calculation to determine how the openings need to be varied to avoid nesting radially adjacent openings. Any one or combination of these techniques can be used to reduce the possibility of nesting, including those described below.

Still another method to reduce nesting is to vary the size of the openings. Preferably, the size of the openings in any row can be varied by altering the punch depth, such as by varying the stop position of the punch every one, two, or desired number of punches. When two or more punches are used, each can be set at a different punch depth, and/or have bits of a different size than another punch, and/or have bits of a different geometry.

The expanded metal articles can be combined with wire
winding. For example, a sheet perforated as desired is rolled onto a mandrel so that the ends abut, and then wire is wrapped around this perforated substrate in a desired pattern. The winding can reinforce the solid (unperforated) areas, provide a champfered end, and/or partially cover the perforations. The wrapping of the wire avoids the need to weld the edges of the sheet. Fig. 4B shows the device in Fig. 4A having three separate areas **307** on which wire is wound. The wire increases the strength of the device in resisting the explosive force of the gas charge. One end is shown where the winding **309** provides the geometry of a champfered end (or approximation of a champfered end). The wire wound perforated sheet can be sintered or brazed to secure the wire wrapping. When wound over existing perforations, the winding can be used to further increase or tailor the effective opening space (that is, the resulting pressure drop) to a desired degree.

Although the present invention has been described with particular reference to filters for airbag assemblies, there are other uses for such an article, such as an electrode and to replace the Dutch weave used in woven airbag filters. As a thinner sheet is used in the beginning, smaller holes are possible, enabling the production of a "micro" expanded metal. Certain prior art perforated metal sheet filters employed a ceramic paper interlayer for additional filtering. Instead, the microexpanded metal sheet (thin enough to be considered a foil, less than 0.254 mm (10 mils) in thickness) can be used instead of ceramic paper. The articles produced by this invention are useful for filtering.

The foregoing description is meant to be illustrative and not limiting. Various changes, modifications, and additions may become apparent to the skilled artisan upon a perusal of this specification, and such are meant to be within the scope of the invention as defined by the claims.

## Claims

1. A method for making a filter from a variable opening pitch expanded metal sheet, comprising: (a) feeding a length of metal sheet by discrete steps along the length of the sheet; (b) perforating to form a row of perforations transverse to the length of the sheet to produce a perforated sheet; (c) stretching the perforated sheet longitudinally causing said perforations to elongate into openings and produce an expanded metal sheet having a multiplicity of rows of openings, wherein the spacing between adjacent rows of openings is not constant; and (d) making a filter from the expanded metal sheet by rolling the expanded metal sheet into a tube and welding to fix the tubular orientation or rolling the expanded metal sheet onto a mandrel so that the ends abut and wrapping wire around the expanded metal sheet.

2. The method of claim 1, further comprising varying the rate of feeding the sheet, the rate of perforating, and/or the amount of stretching to produce the variable opening pitch expanded metal sheet.

3. The method of claim 2, further comprising measuring the combined area of the openings along a predetermined length of the expanded metal sheet and adjusting the feeding rate of the sheet to achieve a predetermined combined area.

4. The method of claim 2, wherein the feeding rate starts at a predetermined value and gradually increases and then gradually decreases, or vice versa.

5. The method of claim 2, wherein the feeding rate starts at a predetermined value and gradually increases or decreases and then restarts from the predetermined value.

6. The method of any of claims 1 to 5, additionally comprising a step of flattening the expanded metal sheet.

7. The method of claim 6, further comprising measuring the combined area of the openings along a predetermined length of the flattened expanded metal sheet and adjusting the feeding rate of the sheet to achieve a predetermined combined area.

8. The method of claim 1, in which the variable opening pitch expanded metal sheet is rolled up to form the filter, so that radially adjacent openings do not nest.

9. The method of claim 8, in which the filter is an automobile airbag filter.

10. A filter comprising a variable opening pitch expanded metal sheet having a multiplicity of rows of openings wherein the spacing between adjacent rows is not constant, in which the expanded metal sheet is (i) rolled into a tube and welded to fix the tubular orientation or (ii) rolled so that the ends abut and wire is wrapped around the expanded metal sheet, the filter being obtainable by the method of any of claims 1 to 8.

11. The filter of claim 10, which is an automobile airbag filter.

12. The filter of claim 11, in which the variable pitch expanded metal sheet is flattened.

13. The filter of claim 12, in which radially adjacent openings in the rolled variable pitch expanded metal sheet do not nest.

## Patentansprüche

1. Verfahren zur Herstellung eines Filters aus einem Streckmetallblech mit variablem Öffnungsabstand, mit: (a) Zuführen einer Länge an Metallblech in diskreten Schritten entlang der Länge des Blechs; (b) Perforieren zur Bildung einer Reihe aus Perforationen quer zu der Länge des Blechs, um ein perforiertes Blech zu erzeugen; (c) Strecken des perforierten Blechs in Längsrichtung, wodurch bewirkt wird, dass die Perforationen sich in Öffnungen verlängern und ein Streckmetallblech mit mehreren Reihen an Öffnungen erzeugt wird, wobei der Abstand zwischen benachbarten Reihen an Öffnungen nicht konstant ist; und (d) Herstellen eines Filters aus dem Streckmetallblech durch Aufrollen des Streckmetallblechs zu einer Röhre und Schweißen, um röhrenförmige Anordnung zu fixieren, oder durch Aufrollen des Streckmetallblechs auf einen Drehstift, so dass die Enden aneinander liegen und Umwickeln des Streckmetallblechs mit einem Draht.

2. Verfahren nach Anspruch 1, das ferner umfasst: Variieren der Geschwindigkeit der Zuführung des Blechs, der Rate des Perforierens und/oder der Größe der Streckung, um das Streckmetallblech mit variablem Öffnungsabstand zu erzeugen.

3. Verfahren nach Anspruch 2, das ferner umfasst: Messen der kombinierten Fläche der Öffnungen entlang einer vorbestimmten Länge des Streckmetallblechs und Einstellen der Zuführgeschwindigkeit des Blechs derart, dass die vorbestimmte kombinierte Fläche erreicht wird.

4. Verfahren nach Anspruch 2, wobei die Zuführgeschwindigkeit bei einem vorbestimmten Wert beginnt und graduell ansteigt und dann graduell abnimmt, oder umgekehrt.

5. Verfahren nach Anspruch 2, wobei die Zuführgeschwindigkeit bei einem vorbestimmten Wert beginnt und graduell ansteigt oder abfällt und dann erneut bei dem vorbestimmten Wert beginnt.

6. Verfahren nach einem der Ansprüche 1 bis 5, das ferner einen Schritt des Glättens des Streckmetallblechs umfasst.

7. Verfahren nach Anspruch 6, das ferner umfasst: Messen der kombinierten Fläche der Öffnungen entlang einer vorbestimmten Länge des geglätteten Streckmetallblechs und Einstellen der Zuführgeschwindigkeit des Blechs derart, dass eine vorbestimmte kombinierte Fläche erreicht wird.

8. Verfahren nach Anspruch 1, in welchem das Streckmetallblech mit variablem Öffnungsabstand zur Bildung des Filters aufgerollt derart wird, dass radial beabstandete Öffnung nicht ineinander liegen.

9. Verfahren nach Anspruch 8, in welchem der Filter ein Fahrzeug-Airbag-Filter ist.

10. Filter mit einem Streckmetallblech mit variablem Öffnungsabstand mit mehreren Reihen aus Öffnungen, wobei der Abstand zwischen benachbarten Reihen nicht konstant ist, in welchem das Streckmetallblech (i) zu einer Röhre aufgerollt und verschweißt ist, um die röhrenförmige Anordnung zu fixieren, oder (ii) so aufgerollte ist, dass die Enden aneinander liegen und Draht um das Streckmetallblech herumgewickelt ist, wobei der Filter durch das Verfahren nach einem der Ansprüche 1 bis 8 erhalten werden kann.

11. Filter nach Anspruch 10, der ein Fahrzeug-Airbag-Filter ist.

12. Filter nach Anspruch 11, in welchem das Streckmetallblech mit variablem Öffnungsabstand geglättet ist.

13. Filter nach Anspruch 12, in welchem radial benachbarte Öffnungen in dem aufgerollten Streckmetallblech mit variablem Öffnungsabstand nicht ineinander liegen.

## Revendications

1. Procédé de fabrication de filtres à partir d'une feuille métallique expansée à pas d'ouverture variable, comprenant le fait de : (a) fournir une longueur suffisante de feuille métallique par étapes successives ; (b) poinçonner afin de former une rangée de perforations transversales par rapport à la longueur de la feuille en vue de produire une feuille perforée ; (c) étirer la feuille perforée longitudinalement, ce qui entraîne lesdites perforations à s'allonger en ouvertures et à produire une feuille métallique expansée présentant une multiplicité d'ouvertures alignées en rangées, **caractérisé en ce que** l'espacement entre des rangées adjacentes d'ouvertures n'est pas constant ; et (d) fabriquer un filtre à partir de la feuille métallique expansée en enroulant la feuille métallique expansée en un tube et en la soudant pour fixer l'orientation tubulaire ou en enroulant la feuille métallique expansée sur un mandrin de façon que les extrémités viennent en butée et en enroulant un fil métallique autour de la feuille métallique expansée.

2. Procédé selon la revendication 1 comprenant de plus une étape pour faire varier le débit d'alimentation en feuille, le taux de poinçonnage et/ ou la quantité d'étirement afin de produire la feuille métallique expansée à pas d'ouverture variable.

3. Procédé selon la revendication 2 comprenant en outre une étape de mesure de la surface combinée des ouvertures le long d'une longueur prédéterminée de la feuille métallique expansée et de réglage du débit d'alimentation en feuille afin d'obtenir une surface combinée prédéterminée.

4. Procédé selon la revendication 2, **caractérisé en ce que** le débit d'alimentation en feuille débute à une valeur prédéterminée et s'accroît progressivement et diminue ensuite progressivement, ou vice versa.

5. Procédé selon la revendication 2, **caractérisé en ce que** le débit d'alimentation démarre à une valeur prédéterminée et augmente ou diminue progressivement et redémarre ensuite à partir de la valeur prédéterminée.

6. Procédé selon l'une quelconque des revendications 1 à 5, comprenant de plus une étape d'aplanissement de la feuille métallique expansée.

7. Procédé selon la revendication 6 comprenant de plus une étape de mesure de la surface combinée des ouvertures sur une longueur prédéterminée de la feuille métallique expansée aplanie et une étape de réglage du débit d'alimentation en feuille afin d'obtenir une surface combinée prédéterminée.

8. Procédé selon la revendication 1, **caractérisé en ce que** la feuille métallique expansée à pas d'ouverture variable est enroulée pour former le filtre de façon à ce que des ouvertures radialement adjacentes ne s'emboîtent pas.

9. Procédé selon la revendication 8, dans lequel le filtre est un filtre pour airbag d'automobile.

10. Filtre comprenant une feuille métallique expansée à pas d'ouverture variable présentant une multiplicité de rangées d'ouvertures **caractérisé en ce que** l'espacement entre des rangées adjacentes n'est pas constant, et **en ce que** la feuille métallique expansée est (i) enroulée en un tube et soudée afin de fixer l'orientation tubulaire ou (ii) enroulée de sorte que les extrémités soient en contact l'une avec l'autre et un fil métallique est enroulé autour de la feuille métallique expansée, le filtre pouvant être obtenu par le procédé selon l'une quelconque des revendications 1 à 8.

11. Filtre selon la revendication 10, **caractérisé en ce qu'**il est un filtre d'un airbag d'automobile.

12. Filtre selon la revendication 11, **caractérisé en ce que** la feuille métallique expansée à pas variable est aplanie.

13. Filtre selon la revendication 12, **caractérisé en ce que** des ouvertures adjacentes radialement dans la feuille métallique expansée à pas variable enroulée ne s'emboîtent pas.
